**Europäisches Patentamt**

**European Patent Office**

**Office européen des brevets**

(19)

(11) Numéro de publication: **0 173 646**
**B1**

## FASCICULE DE BREVET EUROPEEN

(12)

(45) Date de publication du fascicule du brevet:
**30.03.88**

(51) Int. Cl.⁴: **A 23 L 1/27**, A 23 L 1/195,
A 23 L 1/40, A 23 L 1/24

(21) Numéro de dépôt: **85810349.2**

(22) Date de dépôt: **29.07.85**

(54) **Procédé de fabrication d'un concentré épaississant pour sauces liées.**

(30) Priorité: **30.07.84  CH 3680/84**

(43) Date de publication de la demande:
**05.03.86 Bulletin 86/10**

(45) Mention de la délivrance du brevet:
**30.03.88 Bulletin 88/13**

(84) Etats contractants désignés:
**AT BE CH DE FR GB IT LI LU NL SE**

(56) Documents cités:
**EP - A - 0 012 465**
**EP - A - 0 026 102**
**EP - A - 0 076 381**
**BE - A - 782 853**
**FR - A - 2 170 239**
**FR - A - 2 357 190**
**FR - A - 2 466 202**
**GB - A - 1 203 491**

(73) Titulaire: **BATTELLE MEMORIAL INSTITUTE, 7 route de Drize, CH-1227 Carouge/Genève (CH)**

(72) Inventeur: **Glddey, Claude, 59, route de Chêne, CH-1208 Geneve (CH)**
Inventeur: **Ayerbe, André, 22 Allée des Eaux Farouches, F-91000 Gif sur Yvette (FR)**
Inventeur: **Van Schouwenburg, Aaltje, 3, chemin des Trois-Nants, CH-1228 Aire La Ville (CH)**

(74) Mandataire: **Dousse, Blasco et al, 7, route de Drize, CH-1227 Carouge/Genève (CH)**

## Description

La présente invention a pour objet un procédé de fabrication d'un produit alimentaire concentré destiné à épaissir des sauces liées, notamment à la préparation d'épaississants, type béchamel utilisable pour lier, par exemple, des potages. Ce procédé est défini à la revendication 1.

L'état de la technique tel que connu à ce jour dans ce domaine peut être illustré par les documents suivants:

Le document WO 83/02548 concerne un procédé où intervient la stérilisation de crèmes concentrées végétales et animales. Ce procédé implique, entre autre, le malaxage avec une huile de matières alimentaires sèches et solides sous forme divisée et la stérilisation par chauffage. Ce document ne mentionne cependant pas la préparation d'une émulsion avec de l'eau.

Le document japonais J-5 8031-951 divulgue une émulsion huile-eau contenant des protéines de lait ou végétales et des sucres. Le document n'indique cependant pas la présence, dans cette émulsion, de produits à base d'amidon.

Le document japonais J-5 8212-752-A propose un produit assez similaire à celui du document précédent, avec cette différence que l'émulsion décrite peut contenir, en plus, des amidons. Par contre, le traitement à haute température auquel le produit est soumis a lieu après que l'émulsion huile-eau ait été formée et, de plus, ce produit est destiné à un usage différent (topping et filling material) de celui auquel est destiné le produit de l'invention.

Le document japonais J-5 6021-553 concerne également une émulsion eau-dans-huile destinée à être battue en chantilly. Cette émulsion contient des esters de saccharose et d'autres polysaccharides mais pas d'amidon.

Le document japonais J-5 6107-766 décrit également une émulsion huile/eau utilisable comme assaisonnement et contenant, outre un extrait de viande, du sel, des esters de saccharose et des agents épaississants comme la gomme xanthane, Il ne semble cependant pas que le produit alimentaire décrit dans cette référence ait une analogie directe avec le produit obtenu suivant l'invention.

Le document EP-12 465 (UNILEVER) décrit un concentré contenant, par exemple, des amidons, protéines, sel, épices et autres condiments, matières grasses et eau. Par addition d'eau bouillante à un tel concentré, on obtient un potage. Bien qu'il y ait analogie, au point de vue composants principaux, entre cette divulgation et l'invention, il est évident que des différences considérables existent aussi bien au point de vue type de produit (la référence enseigne un concentré pour potages tandis que l'invention concerne un liant pour sauces) que du mode de fabrication (dans la référence, la stérilisation se fait après addition d'eau ce qui n'est pas le cas dans l'invention).

Le document EP-76 381 (CPC INTERNATIONAL) divulgue un produit dispersible à base d'amidon utilisable comme épaississant culinaire (food thickener). Pour préparer ce produit (voir page 5), on mélange un amidon granulé avec un surfactif contenant un acide gras et de l'eau avec, en option, un ou plusieurs stabilisants tels que gommes xanthane, guar, alginate, etc., puis on chauffe entre 50 et 120°C. Il ne semble pas être question, dans cette référence, de stériliser à chaud de l'amidon et une huile puis d'émulsionner ensuite ces composants avec de l'eau.

Le document FR-A-2 466 202 (COLAS) concerne la préparation d'une sauce de type béchamel par un procédé suivant lequel on détruit temporairement l'édifice moléculaire tridimentionnel résultant de la gélatinisation d'un amidon incorporé à un produit épaississant prêt à l'emploi, la cohésion de cette structure pouvant être restaurée, lors de l'emploi, par simple chauffage. Il s'agit donc là d'un produit théoriquement identique, au point de vue utilisation, à celui de l'invention mais dont le procédé de fabrication est tout différent.

Le document GB-A-2 101 868 (SWIFT) décrit un condiment alimentaire utilisable en récipient aérosol et permettant d'aromatiser des aliments. Cette préparation contient, outre des substances aromatisantes, des produits lui conférant une haute viscosité lorsqu'elle est appliquée sur les aliments à aromatiser, ces produits étant à base de polysaccharides transformables en gels par la chaleur. Ce produit est bien différent de celui de l'invention.

Le document EP-76 549 (UNILEVER) décrit une émulsion alimentaire huile-eau basse calorie, contenant une protéine et, comme épaississant, notamment de l'amidon (voir page 2, ligne 34). Ce produit est cependant bien différent de celui de l'invention comme on peut le constater de par le procédé de préparation décrit à la page 4, lignes 25-35. En effet, d'après ce procédé, on constitue d'abord une crème à partir de matière grasse et de protéine de lait en solution aqueuse, puis, après avoir ajouté l'épaississant, on dénature la protéine par la chaleur et on réémulsionne le produit crémeux dans une seconde phase de matière grasse. Il n'ya donc là aucune ressemblance avec le procédé de l'invention.

Le document EP-101 105 (UNILEVER) décrit une émulsion eau-dans-huile basse calorie contenant deux phases aqueuses indépendantes et comprenant des protéines et des carbohydrates accompagnés de condiments, de préservatifs et d'agents dépresseurs de l'activité en eau. Cependant, le procédé de fabrication (voir page 5) n'implique nullement les étapes caractéristiques de l'invention.

Le document EP-37 208 (UNILEVER) concerne un procédé pour modifier la texture et le goût d'un amidon de maïs utilisable notamment pour préparer des sauces et des potages. Ce procédé consiste à chauffer ce produit entre 120 e 200°; cependant, ce traitement a lieu à sec et non pas en présence d'un corps gras comme dans l'invention.

Le document EP-26 102 (CPC INTRENATIONAL) concerne un produit déshydraté qui, lorsqu'on lui ajoute un liquide approprié, permet de reconstituer un aliment utilisable comme sauce, potages et autres, notamment à base de tomates. Pour fabriquer un tel produit (voir Col. 4, lignes 15-60), on déshydrate un amidon gélatinisé par la chaleur, soit par pressage à froid, soit par lyophilisation.

Le document BE-A-782 853 (EDUARDO'S INDUSTRIES) divulgue un assaisonnement concentré pour aliments disponible sous forme d'un gâteau solide de bonne conservation contenant une matière grasse et un féculent. Comme le produit résultant de la présente invention est liquide ou semi-liquide et contient de l'eau, l'enseignement de ce document ne peut être considéré comme pertinent.

Le document GB-A-1 203 491 (KOHNSTAMM & Co) décrit un additif alimentaire gélatineux sec contenant un sucre, une gomme, une huile comestible et un amidon ou une gélatine. Les composants sont mélangés à la matière grasse fondue, mais sans addition d'eau. En conséquence, ce document diffère de la présente invention.

Le document FR-A-2 170 239 (NAARDEN) divulgue une méthode pour lier un amidon et une matière grasse contenant des ingrédients lipophiles tels que des vitamines, des arômes, des colorants alimentaires et autres. Comme liants, on utilise un additif polaire tel qu'un phosphatide ou un glycéride. Quoiqu'on puisse utiliser de l'eau dans le processus de liaison, on élimine celle-ci par évaporation à la fin des opérations, de manière à obtenir un produit alimentaire sec. En conséquence, ce procédé ne ressemble pas à celui de l'invention.

Le document FR-A-2 357 190 (SCHRODER & Co) concerne la préparation de mayonnaise stérilisée et, par conséquent, est sans relation pratique avec la présente invention.

Le document EP-A-12 465 (UNILEVER) divulgue un procédé pour préparer un concentré aqueux contenant de l'amidon et une matière grasse qui peut être stérilisé et ultérieurement utilisé pour la reconstitution d'une soupe épaisse sans grumeaux, une sauce, une sauce de viande ou autre. Dans ce contexte, le produit enseigné par ce document ressemble au produit de l'invention. Cependant, si on se réfère aux revendications et aux exemples, on voit que la méthode de fabrication de cet additif alimentaire implique de mélanger les composants et l'eau et de procéder à la stérilisation après-coup. Au contraire, dans la présente invention, on effectue la stérilisation de l'amidon et de l'huile avant addition de l'eau (stérilisée), de telles dispositions admettant des températures de stérilisation plus élevées et plus efficaces.

Le document EP-A-26 102 (CPC INTERNATIONAL) concerne un produit alimentaire deshydraté qui, après rehydratation, fournit une sauce tomate reconstituée. On prépare ce produit par lyophilisation d'une masse de féculent prégélifiée contenant des solides de tomate. A ce titre, ce produit a peu de parenté avec la présente invention.

Dans la présente invention, on peut utiliser comme matière grasse la plupart des huiles comestibles habituelles et, notamment les huiles d'arachide, de tournesol, de soja, de maïs, de coton, de noix, d'olive, de colza, de pépins de raisin, etc....

Comme féculents, on peut utiliser la plupart des farines et amidons connus dans l'alimentation et, notamment les farines de céréales (blé, riz, froment, orge, seigle, maïs, avoine et autres), la fécule de pomme de terre ou de topinambour, le tapioca et autres produits similaires. On évitera les amidons prégélatinisés car ceux-ci ne conviennent pas au présent procédé.

Les proportions pondérales d'huile et de farine varient entre des limites assez larges dictées, d'une part, par la viscosité du produit cherché, celle-ci ne devant pas outrepasser certaines valeurs au-delà desquelles le produit ne serait plus aisément dosable (ceci étant particulièrement notable pour les compositions riches en farine et pauvres en huile) et, d'autre part, par son efficacité épaississante (ceci étant particulièrement notable pour les produits pauvres en farine et riches en huile). De manière générale, sont pratiquement utilisables des proportions matière grasse (a)/féculent (b) variant entre 7/3 et 1/2, un domaine préféré étant situé dans l'intervalle 3/2 - 1/2.

Le temps nécessaire pour réaliser la stérilisation varie suivant la température choisie et est compris, de manière générale, entre 15 et 45 min. De préférence, on choisira de chauffer plus longtemps (c'est-à-dire de 30 à 45 min) lorsque la température de stérilisation est choisie dans la région inférieure de la gamme sus-indiquée (c'est-à-dire entre 120 et 130°C) et, vice-versa, c'est-à-dire que l'on chauffera de 15 à 30 min pour des températures avoisinant 150°C. Des températures trop basses ou trop élevées, respectivement, des temps trop courts ou trop prolongés, sont à éviter afin d'assurer une stérilisation suffisante pour une bonne conservation mais sans que le féculent n'ait tendance à se colorer.

L'émulsification par l'eau stérilisée (celle-ci étant stérilisée par les moyens habituels, c'est-à-dire par ébullition) de la farine et de l'huile se fait par agitation ou secouage dans des conditions aseptiques, de préférence à température ambiante. On notera qu'en aucun cas on ne peut stériliser l'émulsion une fois celle-ci formée, car une telle opération conduirait à sa prise en masse et, une fois durcie, elle ne peut plus être ni dosée, ni remplir son rôle ultime d'épaississant de manière correcte. L'agitation ou secouage est réalisé par les moyens habituels connus de l'homme de métier (par exemple au moyen d'un agitateur ou d'une secoueuse) et est poursuivi jusqu'à réalisation d'une émulsion fine, homogène et crémeuse dont la consistance est comprise entre celle d'une crème fluide et celle d'une moutarde épaisse. La quantité d'eau à ajouter au total de l'huile et du féculent pour réaliser une telle émulsion est comprise, en poids, entre 0,25/1 ed 1/1.

Le type d'émulsion ainsi réalisé (c'est-à-dire le fait de savoir si cette émulsion correspond au type eau-dans-huile ou huile-dans-eau) dépend des proportions relatives de phase aqueuse et de phase grasse. Lorsque l'émulsion contient beaucoup d'huile par rapport à l'eau, c'est le premier type d'émulsion qu'on obtient (et vice-versa). L'amidon peut se trouver préférentiellement distribué dans la phase grasse ou dans la phase aqueuse suivant les conditions de préparation. En effet, on peut effectuer le procédé défini à la revendication 1 suivant les variantes définies aux revendications 2 et 3.

Suivant la première variante, l'amidon est très intimement dispersé dans l'huile avant stérilisation et émulsion avec l'eau. Aussi, là, l'amidon sera-t-il principalement dispersé dans la phase grasse, la phase aqueuse n'en contenant que peu ou pas.

Dans la seconde variante, on n'effectue pas un mélange intime préalable de la farine et de l'huile et une partie nettement plus importante de l'amidon passe dans la phase aqueuse. L'émulsion présente généralement dans ce second cas, à proportions égales d'ingrédients, une viscosité plus élevée que dans le premier cas.

On notera cependant que les manipulations nécessaires pour conditionner l'emulsion dans un récipient doseur sont plus aisées suivant la seconde variante qui suivant la première. Ainsi, dans la seconde, tous les ingrédients, sauf l'eau, sont stérilisés à l'intérieur même du récipient doseur ce qui n'est pas le cas dans la première de ces variantes.

Le type de flacon doseur utilisé est quelconque. De manière générale, on utilise un type de récipient distributeur de produits alimentaires pâteux ou crèmeux de type habituel dans l'industrie alimentaire. Ce type de dispositif consiste en un flacon en plastique ou métallique que l'on munit, après remplissage par le produit à distribuer, d'un couvercle pourvu d'une vanne (comprenant une bille reposant sur un siège) actionnable manuellement et commandant l'ouverture ou la fermeture (grâce à un ressort de rappel agissant sur cette bille) d'une tubulure de distribution dudit produit sous forme d'une pâte ou d'une fluide épais. La pression interne nécessaire pour expulser le produit est fournie par un gaz inerte sous pression (azote, $N_2O$, $CO_2$, etc.) que l'on a introduit, après coup, dans le récipient par la tubulure de décharge, le remplissage de celui-ci n'étant, à dessein, que partiel afin d'y ménager l'espace nécessaire à la présence du gaz de propulsion. La pression de ce gaz est de l'ordre de 3 à 8 bar.

On notera encore qu'il est avantageux d'ajouter aux composants de l'émulsion lors de la formation de celle-ci, un émulsionnant, c'est-à-dire un surfactif simultanément hydro- et liposoluble. Cmme tel, la plupart des surfactifs de catégories alimentaires en proportion pondérale de l'ordre de 0,1 à 2% par rapport au total des autres ingrédients conviennent. De préférence, on ajoute ces surfactifs à l'eau avant de stériliser celle-ci par les moyens habituels, c'est-à-dire chauffage à l'ébullition sous pression atmosphérique ou avec sur-pression de l'ordre de 1 à 2 bar.

Comme émulsionnants préférés, on peut citer les produits suivants: lécithine, saccharose palmitate-stéarate, sodium stéaroyl-2-lactylate; Admul 4223 et Hymono 8803 (monoglycérides); Hymono 1123 (ester de polyglycérol).

L'eau stérilisée peut également contenir du sel et autres condiments organoleptiques. De manière générale, on peut encore ajouter au produit de l'invention des stabilisateurs et préservatifs afin d'améliorer encore la stabilité de l'émulsion et la durée de conservation de celle-ci. Parmi ceux-ci, on peut citer le glucose, le glycérol, les antioxydants, les bactéricides, etc.

Les Exemples suivants illustrent l'invention.

*Exemple 1*

On a mélangé intimement dans un mixer (HOBART) 50 g de farine de blé et 50 g d'huile de tournesol jusqu'à obtention d'une dispersion homogène. On a ensuite chauffé cette dispersion 30 min à 130°C afin de la stériliser.

Dans des conditions aseptiques (couverture d'air filtré et purifié sous ultra-violets), on a ajouté à cette dispersion stérilisée 80 ml d'eau contenant 4 g de sel dissous et 4 g d'émulsifiant (saccharose palmitate-stéarate HLB II). Cette eau avait été préalablement stérilisée par chauffage, sous légère pression, 20 min à 120°C. On a agité violemment au moyen d'un émulsionneur (type «mixer» à hélice, marque «Turmix») jusqu'à obtention d'une crème épaisse que l'on a introduite, toujours dans des conditions d'aseptie, dans le flacon d'un récipient doseur préalablement stérilisé (BOXAL). On a fermé le récipient en introduisant dans l'ouverture le dispositif distributeur à pression et, après sertissage par les moyens habituels, on y a introduit de l'azote sous pression (6 bar). On a alors recouvert le dispositif de distribution de son couvercle muni de la commande de vanne et du tube de sortie.

Par pression du doigt sur la commande de vanne, on a pu éjecter ensuite des doses mesurées de l'émulsion que l'on a utilisées pour la préparation de sauces liantes comme suit: un mélange de légumes contenant une proportion notable d'épinards broyés est cuit à l'eau comme dans la préparation d'un potage. Après cuisson, ce potage est distribué dans des assiettes. Les consommateurs ajoutent alors au bouillon aquex une dose de «sterilmulsion» qui permet de lier entre eux les composants solides du potage et, en particulier, la purée d'épinards.

L'émulsion préparée et emmagasinée dans des flacons distributeurs stériles comme décrit ci-dessus s'est conservée sans altération détectable pendant de très longues périodes. On a également préparé une émulsion comme ci-dessus, mais en utilisant, au départ, 100 g de farine pour 50 g d'huile.

*Exemple 2*

Dans un flacon doseur d'environ 500 ml, on a introduit 80 g de fécule de pomme de terre granulée et 120 g d'huile de colza. On a chauffé le tout 45 min à 120° puis, après refroidissement à température ambiante, on a introduit 180 g d'eau stérilisée (voir l'exemple précédent). On a bouché provisoirement le flacon et on l'a secoué violemment 10-15 min à la secoueuse jusqu'à formation d'une émulsion homogène. On a ensuite procédé à la fermeture définitive et à la mise sous pression du produit comme décrit à l'Exemple 1 mais en utilisant du $N_2O$ à la place de l'azote.

Le comportement du produit lors de son utilisation culinaire était identique à celui du produit de l'Exemple 1. Ce produit a été également réalisé en doublant la quantité de fécule par rapport au corps gras.

**Revendications**

1. Procédé de fabrication d'un aliment épaississant pour préparer des sauces liées, type béchamel, se présentant sous la forme d'un additif à l'état stérilisé, caractérisé par les étapes suivantes:

I. on met en présence l'un avec l'autre, puis on stérilise par chauffage à 120-150°C, (a) une matière grasse et (b) un produit féculent;

II. on met en violente agitation les composants (a) et (b) ainsi stérilisés avec une quantité d'eau stérilisée suffisante pour engendrer la formation d'une émulsion de type eau-dans-huile ou huile-dans-eau, le produit féculent étant alors à l'état de dispersion dans l'une et/ou l'autre des phases, aqueuse et grasse, de cette émulsion.

2. Procédé suivant la revendication 1, caractérisé par le fait que

i) on mélange le produit à base d'amidon (b), farine, fécule ou autre, avec le corps gras (a), huile comestible, de manière à obtenir une dispersion de solide dans un liquide;

ii) on chauffe cette dispersion un temps suffisant pour assurer sa stérilisation;

iii) dans des conditions aseptiques, on émulsionne de l'eau stérilisée avec cette dispersion de manière à obtenir une émulsion crémeuse stérile huile/farine/eau;

iv) on conditionne cette émulsion dans des conditions aseptiques dans un récipient doseur permettant, dans l'usage culinaire quotidien, de doser une quantité voulue de l'émulsion et d'incorporer celle-ci à un aliment dans le but de former, par cuisson, une sauce épaississante et liante ajoutée à cet aliment.

3. Procédé suivant la revendication 1, caractérisé par le fait que

a) on introduit, par son ouverture, à l'intérieur d'un flacon doseur non bouché les composants (a) et (b) et on chauffe le tout pour assurer la stérilisation de ces composants;

b) on ajoute l'eau dans des conditions aseptiques et ferme le récipient;

c) on secoue vigoureusement le flacon de manière à réaliser ladite émulsion;

d) on sertit un bouchon à vanne doseuse dans l'ouverture du flacon et remplit celui-ci dans des conditions aseptiques d'un gaz inerte sous pression, le tout de manière que, par commande manuelle ultérieure de ladite vanne, ledit gaz chasse au dehors du flacon une portion mesurée de ladite émulsion stérilisée.

4. Procédé suivant la revendication 1, caractérisé par le fait que l'eau stérilisée contient du sel et un émulsifiant choisi parmi les surfactifs de caractère alimentaire.

5. Procédé suivant la revendication 1, caractérisé par le fait que la matière grasse est une huile comestible.

6. Procédé suivant la revendication 1, caractérisé par le fait que le féculent est un amidon ou une farine tels que ceux provenant des céréales, pommes de terre et tapioca.

**Patentansprüche**

1. Herstellungsverfahren eines verdickenden Nahrungsmittels zur Zubereitung gebundener Saucen des Typs Béchamel, das in Form eines Zusatzes im sterilisierten Zustand vorliegt, gekennzeichnet durch die folgenden Schritte:

I. man schüttet (a) eine Fettmasse und (b) ein stärkemehlhaltiges Produkt eines in das andere und sterilisiert dann durch Erhitzung auf 120 bis 150°C,

II. man setzt unter heftigem Rühren den so sterilisierten Bestandteilen (a) und (b) eine Menge an sterilisiertem Wasser zu, die ausreicht, um eine Emulsion des Typs Wasser-in-Öl oder Öl-in-Wasser hervorzurufen, wobei das stärkemehlhaltige Produkt bereits im dispergierten Zustand in der einen und/oder anderen Phase, wässrig und fett, dieser Emulsion ist.

2. Verfahren nach Anspruch 1, dadurch gekennzeichnet, dass

i) man das Produkt auf Stärkebasis (b), Mehl, Stärke oder dgl., mit der Fettmasse (a), Speiseöl, derart vermischt, um eine Dispersion des Feststoffes in einer Flüssigkeit zu erhalten,

ii) man erhitzt diese Dispersion für eine Zeit, die ausreicht, um ihre Sterilisation zu gewährleisten,

iii) unter aseptischen Bedingungen ermulgiert man das sterilisierte Wasser mit dieser Dispersion derart, dass man eine sterile, cremige Emulsion, Öl/Mehl/Wasser erhält,

iv) man füllt diese Emulsion unter aseptischen Bedingungen in einen Dosierbehälter, der es gestattet, bei der täglichen Verwendung in Küchen eine gewünschte Menge der Emulsion zu dosieren und in ein Nahrungsmittel einzubringen, mit dem Ziel durch Kochen eine verdickende und bindende Sauce zu bilden, die diesem Nahrungsmittel zugeführt ist.

3. Verfahren nach Anspruch 1, dadurch gekennzeichnet, dass man

a) durch Öffnen in das Innere eines nichtverschlossenen Dosierbehälters die Bestandteile (a) und (b) einbringt und das Ganze zur Gewährleistung der Sterilisation dieser Bestandteile erwärmt,

b) Wasser unter aseptischen Bedingungen zusetzt und den Behälter verschliesst,

c) den Behälter kräftig derart schüttelt, um die Emulsion herzustellen,

d) einen Stopfen mit Dosierventil in die Öffnung des Behälters einbringt und diesen unter aseptischen Bedingungen mit einem inerten Druckgas füllt, und zwar derart, dass durch spätere händische Betätigung des Ventils das Gas aus dem Behälter eine abgemessene Portion dieser sterilisierten Emulsion ausbringt.

4. Verfahren nach Anspruch 1, dadurch gekennzeichnet, dass das sterilisierte Wasser Salz und einen Emulgator enthält, der aus den oberflächenaktiven Materialien mit Nahrungsmittelcharakter ausgewählt ist.

5. Verfahren nach Anspruch 1, dadurch gekennzeichnet, dass das Fettmaterial ein Speiseöl ist.

6. Verfahren nach Anspruch 1, dadurch gekennzeichnet, dass das stärkemehlhaltige Mittel eine Stärke oder ein Mehl ist, wie sie von Getreiden, Kartoffeln und Tapioca herrühren.

**Claims**

1. A method for producing a thickener foodstuff usable for preparing thick sauces of the bechamel kind this thickener being available in the form of a sterilized additive, characterized by the following steps:

**0 173 646**

I. a fatty material (a) and a starch product (b) are brought together then they are sterilized by heating to 120 to 150°C;

II. components (a) and (b) thus sterilized are set into violent agitation with an amount of sterilized water sufficient to provide the formation of an emulsion of the water-in-oil or oil-in-water type, the starch product being then dispersed in one and/or the other of the aqueous or fatty phases of this emulsion.

2. Method according to claim 1, characterized in that

i) the starch based product (b), i.e. a flour, starch or other, is mixed with the fatty material (a), i.e. an edible oil, so as to obtain a dispersion of a solid in a liquid;

ii) this dispersion is heated for a time sufficient to ensure sterilization;

iii) under aseptical conditions, sterilized water is emulsified with this dispersion so as to obtain a sterile creamy emulsion oil/flour/water;

iv) this emulsion is conditioned under aseptical conditions in a dispensing container enabling, in daily kitchen use, to dispense a desired quantity of the emulsion and to incorporate it into a food for forming, by cooking, a thickener and binder sauce added to the foodstuff.

3. Method according to claim 1, characterized in that

a) components (a) and (b) are introduced through an opening into the inside of a non stoppered dispensing container and the whole is heated to ensure sterilization of the components;

b) water is added thereto under aseptical conditions and the container is sealed;

c) the container is vigorously shaken to achieve formation of said emulsion;

d) a stopper lid with a distributing vane is fitted to the opening of the container and the latter is filled under aseptical conditions with a pressurized inert gas, the whole being to enable said gas to expel outside of the container under manual control of said vane, a measured portion of said sterilized emulsion.

4. Method according to claim 1, characterized in that the sterilized water contains salt and an emulsifier selected from food surfactants.

5. Process according to claim 1, characterized in that the fatty material is an edible oil.

6. Method according to claim 1, characterized in that the starch is a starch or a flour such as from cereals, potato and tapioca.